# EUROPÄISCHE PATENTSCHRIFT

(11) **EP 0 922 623 B1**
(45) Veröffentlichungstag und Bekanntmachung des Hinweises auf die Patenterteilung: **21.05.2003**
(21) Anmeldenummer: 98121931.4
(22) Anmeldetag: 19.11.1998
(51) Int. Cl.: B62D 1/16, B62D 1/18

(54) **Anordnung zur Spaltabdeckung an einer Aussparung**
Arrangement for covering a gap at a recess
Dispositif pour le recouvrement d'une fente d'un évidement

(30) Priorität: 10.12.1997 DE 19754831
(43) Veröffentlichungstag der Anmeldung: 16.06.1999
(73) Patentinhaber: Volkswagen Aktiengesellschaft, 38436 Wolfsburg (DE)
(72) Erfinder: Odysseus, Andronis, 38100 Braunschweig (DE)

(56) Entgegenhaltungen:
- DE-U- 29 502 605
- US-A- 4 899 612

## Beschreibung

Die Erfindung betrifft eine Anordnung zur Spaltabdeckung entsprechend dem Oberbegriff des Anspruchs 1.

Eine gattungsgemäße Anordnung zur Spaltabdeckung ist aus der DE 295 02 605 U1 bekannt. Darin wird ein plattenförmiges starres Bauteil zur Spaltabdeckung eingesetzt. Die Anordnung ist vergleichsweise kompliziert aufgebaut und sperrig.

Ausgehend von diesem Stand der Technik wird eine gattungsgemäße Anordnung gesucht, welche platzsparend eingesetzt werden kann und vergleichsweise einfach im Aufbau ist.

Die Erfindung liefert mit den Merkmalen des Hauptanspruchs eine solche Anordnung. Erfindungsgemäß wird vorgeschlagen, daß das Verkleidungsteil und das der Spaltabdeckung dienende Bauteil zu einer im wesentlichen kreisförmigen Außenkontur zusammenführbar sind. Somit kann die erfindungsgemäße Anordnung zur Spaltabdeckung platzsparend auch bei beengten Platzverhältnissen (z.B. bei Kleinwagen) eingesetzt werden. Der Aufbau läßt sich konstruktiv vergleichsweise einfach halten. Darüber hinaus ist ein optisch ansprechender Gesamteindruck erzielbar.

Eine zweckmäßige Ausgestaltung der Erfindung sieht vor, daß das der Spaltabdeckung dienende Bauteil im Bereich eines einem Lenkrad zugewandten Endes des Verkleidungsteils und im Bereich von dessen Oberseite angelenkt ist. Auf diese Weise kann das der Spaltabdeckung dienende Bauteil als starres Teil ausgeführt sein, was dessen Aufbau vereinfacht. Denkbar wäre nämlich auch eine Anlenkung des besagten Bauteils beispielsweise an der Begrenzungswand der Aussparung und gleichzeitig am Verkleidungsteil. Wenn die Lenksäule axial bewegt wird, müßte dann das besagte Bauteil in der Länge flexibel gehalten werden, weil sich der Abstand zwischen beiden Anlenkpunkten verändert.

Zweckmäßig kann das Federelement in Form einer Blattfeder ausgeführt sein, wodurch große federunterstützte Schwenkbewegungen des der Spaltabdeckung dienenden Bauteils auf einfache Weise ermöglicht werden. Aber auch eine blattfederartige Ausführung ist denkbar, die besonders stabil ist.

Wenn das Verkleidungsteil einteilig ist, wirkt sich dies günstig auf die Stabilität der Anordnung auf. Die Wahrscheinlichkeit von durch gegeneinander bewegte Teile verursachten Fahrgeräusche wird zudem reduziert. Es kann aber auch zweckmäßig sein, daß das Verkleidungsteil aus einem Oberteil und einem Unterteil besteht. Dabei können das Ober- und das Unterteil rastend miteinander verbunden sein. Dies vereinfacht die Montage der erfindungsgemäßen Anordnung.

Wenn gemäß einer weiteren vorteilhaften Ausgestaltung der Erfindung das Verkleidungsteil im Bereich seiner Unterseite mit einer Öffnung versehen ist zur zumindest teilweisen Aufnahme einer Feststelleinrichtung für die Lenksäule, kann die Feststelleinrichtung platzsparend und gut zugänglich in der Anordnung untergebracht werden. Wenn dabei zweckmäßig die Feststelleinrichtung im Bereich der Öffnung im wesentlichen der Außenkontur des Verkleidungsteils angepaßt ist, erfolgt eine optimale Integration der Feststelleinrichtung in die Anordnung. Sinnvollerweise ist dabei vorzusehen, daß in Längserstreckung des Verkleidungsteils die Länge der Öffnung derart bemessen ist, daß eine Längsverschiebung des Verkleidungsteils nicht durch die Feststelleinrichtung behindert wird. Die Feststelleinrichtung umfaßt in höchst zweckmäßiger Ausgestaltung der Erfindung einen Exzenter, wodurch auf einfache Weise eine zuverlässige Feststellung der Lenksäule erzielt wird.

Gemäß einer weiteren vorteilhaften Ausgestaltung der Erfindung weist das Verkleidungsteil eine stirnseitige Öffnung auf, welche zur Aufnahme eines lenkradseitigen Absatzes der Lenksäule dient.

Eine einfache und zweckmäßige Anlenkung des der Spaltabdeckung dienenden Bauteils an das Verkleidungsteil erfolgt über eine Rastverbindung.

Das Verkleidungsteil ist vorteilhafterweise mit wenigstens einem quer gegen die Lenksäule wirkenden Abstützmittel versehen. Dabei kann das Abstützmittel in Form eines hülsenförmigen Federelementes ausgeführt sein. Dies führt zu einer guten radialen und dennoch leicht nachgiebigen Abstützung des Verkleidungsteils. Bei unvorsichtigen Verstellbewegungen der Lenksäule wird somit ein Schaden des Verkleidungsteils vermieden.

Zweckmäßigerweise ist das zur Spaltabdeckung dienende Bauteil im Querschnitt in etwa halbkreisförmig ausgebildet. Dabei ist vorteilhaft, wenn das Verkleidungsteil im Bereich seiner Oberseite eine radial nach innen zurückversetzte Außenfläche aufweist. Somit können sich das Verkleidungsteil und das zur Spaltabdeckung dienende Bauteil auf einfache Weise zu einer kreisförmigen Außenkontur ergänzen und es werden geeignete Abstützflächen geschaffen.

Die Erfindung soll nun anhand eines bevorzugten Ausführungsbeispiels und der beiliegenden Figuren näher erläutert werden. Dabei zeigen
- Fig.1: eine teilweise geschnittene Prinzipansicht der Erfindung von der Seite, wobei nur die wesentlichen Elemente dargestellt sind, in einer oberen Position der Lenksäule;
- Fig.2: eine Ansicht der Erfindung gemäß Fig. 1, jedoch in einer nach unten geschwenkten Position der Lenksäule;
- Fig.3: eine Ansicht der Erfindung gemäß Fig. 2, jedoch mit in Lenkradrichtung hinausgezogener Lenksäule;
- Fig.4: eine Detailansicht des Verkleidungsteils und des zur Spaltabdeckung dienenden Bauteils im Längsschnitt in zusammengeführtem Zustand;
- Fig.5: eine Prinzipdarstellung der Erfindung gemäß Fig. 3 von unten;
- Fig.6: eine perspektivische Prinzipdarstellung der Erfindung, wobei das Lenkrad nicht gezeigt ist;
- Fig.7: einen Querschnitt gemäß Schnittverlauf VII in Fig. 4 ohne Lenksäule und Feststelleinrichtung.

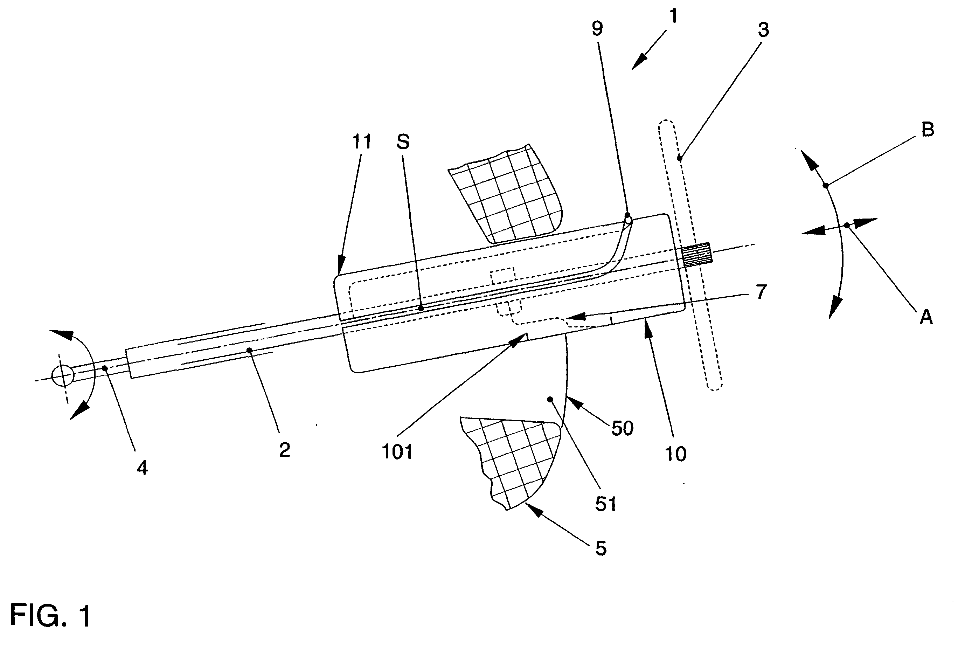

Zunächst wird auf die Fig. 1 bis 3 Bezug genommen. Dort ist eine erfindungsgemäße Anordnung 1 ersichtlich, die zur Spaltabdeckung an einer Aussparung 50 zwischen einer Armaturentafel 5 und einer Lenksäule 2 dient, die in unterschiedlichen Richtungen A, B (vgl. Pfeile) verstellbar ist. Dies setzt natürlich entsprechend große Abmessungen der Aussparung 50 voraus. Die Anordnung 1 umfaßt ferner ein die Lenksäule 2 im wesentlichen umschließendes Verkleidungsteil 10. An das Verkleidungsteil 10 ist über eine Gelenkverbindung 9 ein Abdeckteil 11 angelenkt. Das Verkleidungsteil 10 ist in noch nicht näher dargestellter Weise mit der Lenksäule 2 unverschieblich verbunden und ragt mitsamt dem Abdeckteil 11 durch die Aussparung 50 der Armaturentafel 5 hindurch. Am fahrerseitigen Ende der Lenksäule 2 ist ein gestrichelt angedeutetes Lenkrad 3 dreh- und verschiebefest angebracht, so daß Lageveränderungen des Lenkrades 3 in den Richtungen A (Ziehen bzw. Schieben) und/oder B (Schwenken) auf die Lenksäule 2 übertragen werden. Zwecks Verschieblichkeit der Lenksäule 2 in Richtung ihrer Längsachse ist diese, wie angedeutet, in einem beispielweise als Hohlprofil ausgebildeten und schwenkbar mit einem nicht dargestellten Lenkgetriebe verbundenen Koppelelement 4 axial verschieblich gehalten. Zur Feststellung der Lenksäulenposition ist eine gestrichelt angedeutete Feststelleinrichtung 7 vorgesehen.

Bei einer oberen Position der Lenksäule 3 gemäß Fig. 1 liegt das Abdeckteil 11 auf dem Verkleidungsteil 10 auf und es verbleibt zwischen diesen Teilen nur ein kaum sichtbarer Spalt S. In dieser Position sind das Verkleidungsteil 10 und das Abdeckteil 11 zu einer im wesentlichen kreisförmigen Außenkontur zusammengeführt, wobei diese Kontur über die Länge der Teile 10, 11 in etwa gleich bleibt. Insgesamt nehmen das Verkleidungsteil 10 und das Abdeckteil 11 im zusammengeführten Zustand also in etwa eine zylindrische Form an. Dies führt zu einer sehr kompakten und platzsparenden Bauweise der Anordnung und trägt zudem zu einer leichten Verschiebbarkeit der Lenksäule 2 bei. Darüber hinaus ergibt sich ein optisch höchst ansprechendes Bild.

Weiterhin ist anhand Fig. 1 ersichtlich, daß sich in der gezeigten Position der Lenksäule 2 im Bereich der Aussparung 50 nur ein unterer Spalt 51 unterhalb des Verkleidungsteils 10 ergibt. Dieser Spalt 51 ist aber für eindringenden Schmutz, Staub oder dergleichen nicht so empfänglich und auch optisch dem Blickfeld eines Fahrzeugführers nicht zugänglich. Oberhalb des Verkleidungsteils 10 bzw. des Abdeckteils 11 ist kein nennenswerter Spalt vorhanden, da das Abdeckteil 11 nahezu an der Armarturentafel 5 anliegt.

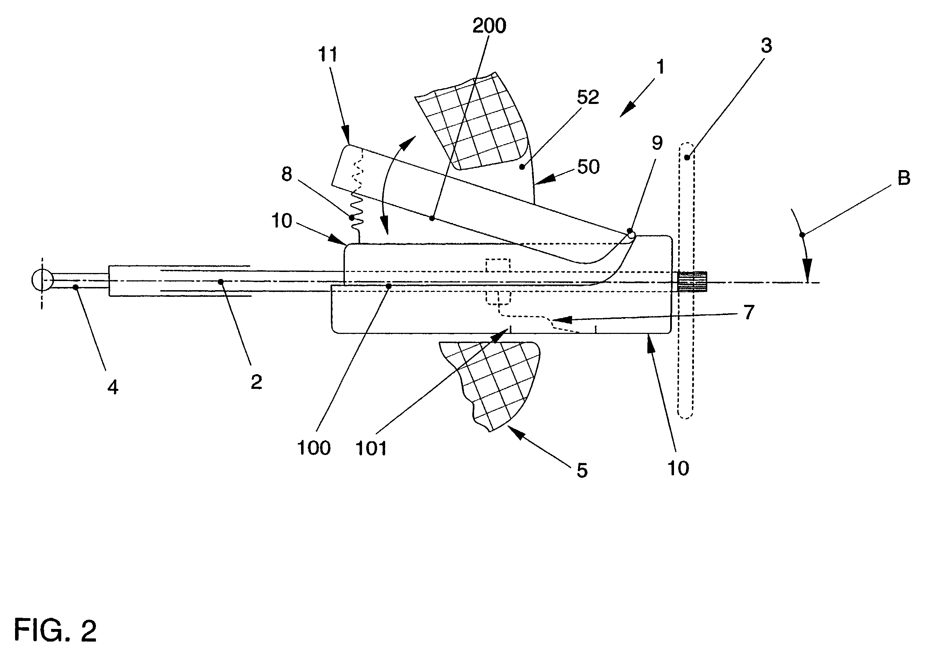

In Fig.2 wurde die Lenksäule 2 mittels des Lenkrades 3 in eine untere Position geschwenkt (Richtung B). Man sieht, daß dadurch oberhalb des Verkleidungsteils 10 im Bereich der Aussparung 50 ein oberer Spalt 52 entsteht. Dieser Spalt 52 ist für das Eindringen von Staub, Schmutz oder dergleichen wesentlich empfänglicher und befindet sich außerdem im Blickwinkel des Fahrzeugführers. Zur Abdeckung dieses Spaltes 52 ist das Abdeckteil 11 vorgesehen, welches mittels einer Spiralfeder 8 um die Gelenkverbindung 9 schwenkbar ist (vgl. Pfeil) und gegen die Armaturentafel 5 gedrückt wird. Somit wird der freie Durchgang des Spaltes 52 abgedeckt.

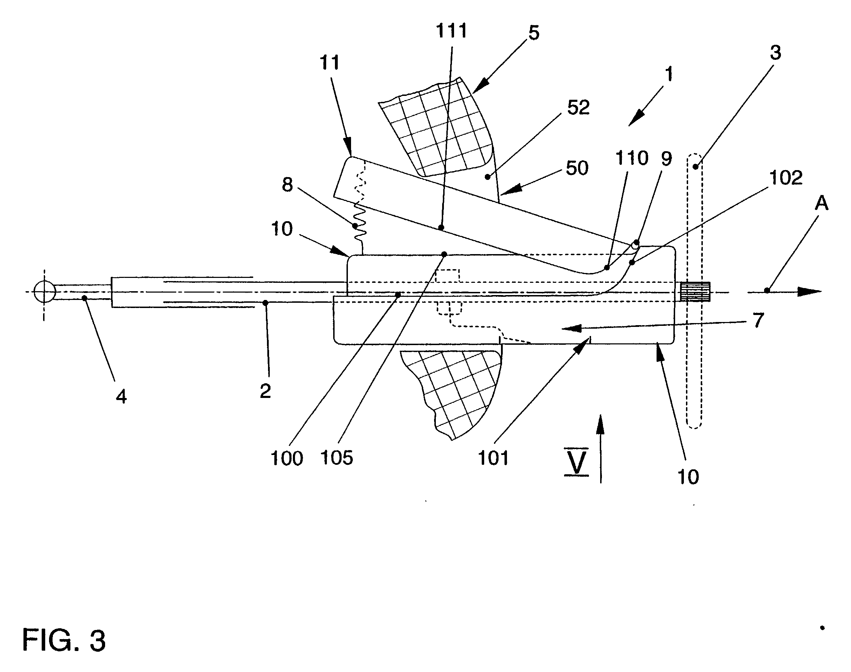

In Fig. 3 befindet sich die Lenksäule 2 immer noch in der unteren Position, jedoch ist die Lenksäule 2 mittels des Lenkrades 3 in Richtung des Lenkrades 3 bzw. des Fahrzeuginnern herausgezogen (Richtung A). Auch in dieser herausgezogenen Position wird der obere Spalt 52 immer noch in gleicher Weise wie in Fig. 2 durch das Abdeckteil 11 abgedeckt. Die Länge des Abdeckteils 11 muß natürlich so bemessen sein, das dieses auch beim maximal möglichen Herausziehen der Lenksäule 2 noch in die Aussparung 50 hineinragt.

Eine in jeder Position der Lenksäule 2 sichergestellte Spaltabdeckung bei einfachem Aufbau des Abdeckteils 11 wird dadurch erreicht, daß das Abdeckteil 11 an der Oberseite des Verkleidungsteils 10, und zwar im Bereich des zum Lenkrad 3 weisenden Endes des Verkleidungsteils 10 angelenkt ist (Gelenkverbindung 9) und der der Gelenkverbindung 9 gegenüberliegende Endbereich des Abdeckteils 11 durch das Federelement 8 nach oben gegen die Armaturentafel 5 gedrückt wird. Auch der Einsatz eines anderen Federelementes, beispielsweise in der Art einer Blattfeder, ist denkbar. Mit einer Spiralfeder können jedoch besonders leicht lange Federwege und damit ein weiter federunterstützter Schwenkbereich des Abdeckteils 11 erzielt werden.

Weiterhin ist anhand Fig.3 ersichtlich, daß der obere Bereich des Verkleidungsteils 10 ab der Gelenkverbindung 9 eine radial zurückversetzte Fläche 105 aufweist, die sich bis zum Ende des Verkleidungsteils 10 hinzieht. Hierdurch entsteht ein absatzartiger Freiraum für das Abdeckteil 11. Das Abdeckteil 11 kann sich beim Zusammenführen mit dem Verkleidungsteil 10 mittels eigener Stützflächen 110, 111 auf sich ergebende Stützflächen 100, 102 des Verkleidungsteils 10 abstützen. Ausgehend von der Gelenkverbindung 9 weist das Verkleidungsteil 10 die Stützfläche 102 auf, welche bogenförmig nach unten verlaufend ausgeführt ist und in die horizontale Stützfläche 100 übergeht. Die Stützfläche 110 des Abdeckteils 11 ist entsprechend bogenförmig ausgeführt und korrespondiert mit der Stützfläche 102, wobei die Stützfläche 110 entsprechend in die horizontale Stützfläche 111 übergeht, welche ihrerseits mit der Stützfläche 100 korrespondiert. Die Stützflächen 102, 110 und 100, 111 bilden zusammen den Spalt S.

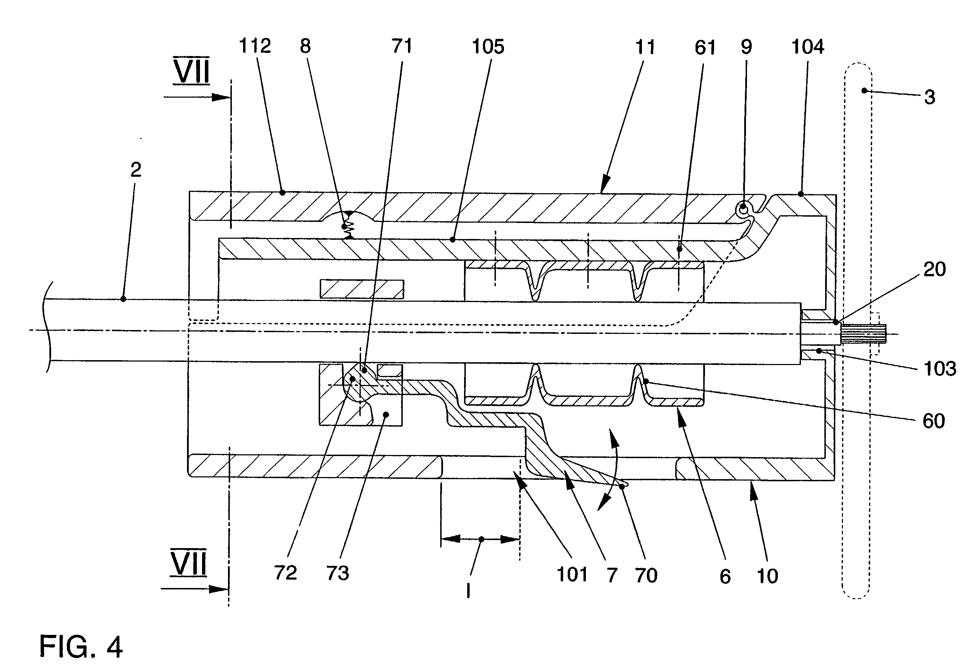

Fig. 4 zeigt eine Detailansicht vom Abdeckteil 11 und vom Verkleidungsteil 10 im Längsschnitt und im zusammengeführten Zustand beider Teile. Die obenliegende, nicht vom Abdeckteil 11 verdeckte Außenfläche des Verkleidungsteils 10 im Lenkradbereich ist dabei mit 104, die Außenfläche des Abdeckteils mit 112 beziffert. Man sieht, daß die Außenflächen 104 und 112 in etwa fluchten. Ferner ist die im oberen Bereich des Verkleidungsteils 10 befindliche, radial nach innen zurückversetzte Außenfläche 105 ersichtlich, welche vom Abdeckteil 11 verdeckt wird. Die Gelenkverbindung 9 kann beispielsweise rastend oder auch mittels Bohrung/Stiftverbindung realisiert werden. Das Federelement 8 ist vorzugsweise mit seinen Federenden jeweils gelenkig zwischen dem Abdeckteil 11 und dem Verkleidungsteil 10 angebracht, um ein sich ergebendes Winkelspiel beim Hochschwenken des Abdeckteils 11 nachvollziehen zu können.

Wie darüber hinaus deutlich wird, weist das Verkleidungsteil 10 im wesentlichen eine büchsenförmige Gestalt auf, deren eine Stirnseite geöffnet ist. Die andere Stirnseite ist mit einer in etwa zentrisch ausgerichteten, hülsenartigen Öffnung 103 versehen, die beim Aufschieben des Verkleidungsteils 10 auf die Lenksäule 2 zur Aufnahme eines Lenksäulenabsatzes 20 dient. Mittels der Öffnung 103 und des Lenksäulenabsatzes 20 läßt sich das Verkleidungsteil 10 leicht axial fixieren. Auch eine gewisse radiale Abstützung in diesem Bereich ist gegeben. Zur sicheren radialen Abstützung sollte jedoch ein weiteres Abstützmittel 6, beispielsweise in Form eines hülsenförmigen Federelementes, vorgesehen sein. Dieses kann mittels nicht näher dargestellter Verbindungselemente 61 an der Innenwandung des Verkleidungsteils 10 befestigt sein. Zur besseren Zugänglichkeit sind nicht dargestellte Ausnehmungen sowohl im Verkleidungsteil 10 als auch im Abstützmittel 6 denkbar. Das Abstützmittel 6 weist radial nach innen gerichtete Einschnürungen 60 auf, deren Innendurchmesser derart bemessen ist, daß ein fester, aber dennoch verschieblicher Sitz auf der Lenksäule 2 gewährleistet ist.

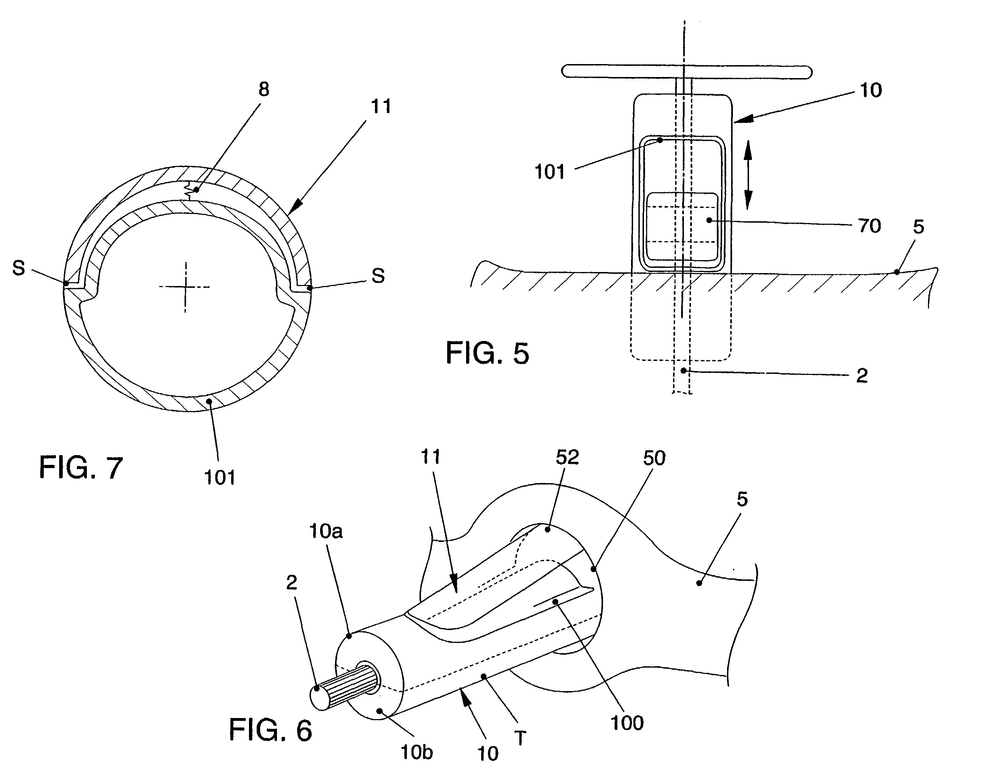

Die Feststelleinrichtung 7 umfaßt einen Feststellhebel 70, über den ein Exzenter 71 klemmend gegen die Lenksäule 2 angestellt werden kann. Der Exzenter 71 ist in einem Gehäuse 72 gelagert, durch welches die Lenksäule 2 geführt ist und welches als Widerlager für den Exzenter 71 dient. Zum Lösen der Verbindung wird der Feststellhebel 70 nach unten, zum Spannen nach oben geschwenkt (vgl. Doppelpfeil), wobei die Beweglichkeit des Feststellhebels 70 im Gehäuse 72 durch eine Aussparung 73 gewährleistet wird. Der Feststellhebel 70 ist von der Unterseite des Verkleidungsteils 10 über eine Öffnung 101 zugänglich. Die Öffnung 101 weist in ihrer Projektionsfläche eine in etwa rechteckige Gestalt auf und ist in ihrer Länge, in Verschieberichtung der Lenksäule gesehen, derart bemessen, daß ein maximaler Verschiebeweg I der Lenksäule 2 bzw. des Verkleidungsteils 10 ohne Behinderung durch den Feststellhebel 70 ermöglicht wird. Dabei ist anzumerken, daß der Feststellhebel 70 im Bereich der Öffnung 101 im wesentlichen an die Außenkonturen des Verkleidungsteils 10 angepaßt ist (vgl. Fig. 4 und 5).

Fig. 6 zeigt noch einmal eine perspektivische Prinzipansicht der erfindungsgemäßen Anordnung, wobei die Armaturentafel 5 angedeutet ist. In der gezeigten Stellung, welche in etwa derjenigen in Fig. 2 bzw. 3 entspricht, wird der sich im Bereich der Aussparung 50 ergebende obere Spalt 52 wirksam und optisch unauffällig abgedeckt. Zur Montageerleichterung kann das Verkleidungsteil 10, wie gestrichelt angedeutet, auch aus einem Oberteil 10 a und einem Unterteil 10 b bestehen, welche in Form einer Rastverbindung zusammengehalten werden. Es wird deutlich, daß sich bei Zusammenführen des Verkleidungsteils 10 und des Abdeckteils 11 eine im wesentlichen zylindrische Außenform bzw. kreisförmige Außenkontur ergeben würde, wobei dies auch durch die Fig. 7 gezeigt ist, welche den zusammengeführten Zustand im Querschnitt zeigt. Das Abdeckteil 11 weist demnach eine im Querschnitt etwa halbkreisförmige Form auf. Dabei sind nur die konturbestimmenden Teile dargestellt.

Die konturbestimmenden Teile sind vorzugsweise aus Kunststoff im Spritzgußverahren gefertigt.

Es sei angemerkt, daß die Fig. 1 bis 7 nicht maßstabsgerecht sind, sondern lediglich der Verdeutlichung der wesentlichen Erfindungsmerkmale dienen.

## Patentansprüche

1. Anordnung (1) zur Spaltabdeckung an einer Aussparung (50) zwischen einer Armaturentafel (5) und einer Lenksäule (2), die in unterschiedlichen Richtungen (A, B) verstellbar ist, umfassend ein die Lenksäule (2) im wesentlichen umschließendes Verkleidungsteil (10), an welches ein der Spaltabdeckung dienendes, starres Bauteil (11) mittels einer Gelenkverbindung (9) angelenkt ist, wobei das der Spaltanordnung dienende Bauteil (11) durch wenigstens ein daran angreifendes Federelement (8) gegen die Armaturentafel (5) drückbar ist, **dadurch gekennzeichnet, daß** das Verkleidungsteil (10) und das der Spaltabdeckung dienende Bauteil (11) im zusammengeführten Zustand eine im wesentlichen kreisförmige Außenkontur aufweisen.

2. Anordnung (1) nach Anspruch 1, **dadurch gekennzeichnet, daß** das der Spaltabdeckung dienende Bauteil (11) im Bereich eines einem Lenkrad (3) zugewandten Endes des Verkleidungsteils (10) und im Bereich von dessen Oberseite angelenkt ist.

3. Anordnung (1) nach Anspruch 1 und 2, **dadurch gekennzeichnet, daß** das Federelement (8) in Form einer Spiralfeder ausgeführt ist.

4. Anordnung (1) nach Anspruch 1 und 2, **dadurch gekennzeichnet, daß** das Federelement (8) blattfederartig ausgeführt ist.

5. Anordnung (1) nach einem der Ansprüche 1 bis 4, **dadurch gekennzeichnet, daß** das Verkleidungsteil (10) einteilig ist.

6. Anordnung (1) nach einem der Ansprüche 1 bis 4, **dadurch gekennzeichnet, daß** das Verkleidungsteil (10) aus einem Oberteil (10a) und einem Unterteil (10b) besteht.

7. Anordnung (1) nach Anspruch 6, **dadurch gekennzeichnet, daß** das Ober- und das Unterteil (10a, 10 b) rastend miteinander verbunden sind.

8. Anordnung (1) nach einem der Ansprüche 1 bis 7, **dadurch gekennzeichnet, daß** das Verkleidungsteil (10) im Bereich seiner Unterseite mit einer Öffnung (101) versehen ist zur zumindest teilweisen Aufnahme einer Feststelleinrichtung (7) für die Lenksäule (2).

9. Anordnung (1) nach Anspruch 8, **dadurch gekennzeichnet, daß** die Feststelleinrichtung (7) im Bereich der Öffnung (101) im wesentlichen der Außenkontur des Verkleidungsteils (10) angepaßt ist.

10. Anordnung (1) nach einem der Ansprüche 8 oder 9, **dadurch gekennzeichnet, daß** in Längserstreckung des Verkleidungsteils (10) die Länge der Öffnung (101) derart bemessen ist, daß eine Längsverschiebung des Verkleidungsteils (10) nicht durch die Feststelleinrichtung (7) behindert wird.

11. Anordnung (1) nach einem der Ansprüche 8 bis 10, **dadurch gekennzeichnet, daß** die Feststelleinrichtung (7) einen Exzenter (71) umfaßt.

12. Anordnung (1) nach einem der Ansprüche 1 bis 11, **dadurch gekennzeichnet, daß** das Verkleidungsteil (10) eine stirnseitige Öffnung (103) aufweist, welche zur Aufnahme eines lenkradseitigen Absatzes (20) der Lenksäule (2) dient.

13. Anordnung (1) nach einem der Ansprüche 1 bis 12, **dadurch gekennzeichnet, daß** die Anlenkung (9) des der Spaltabdeckung dienenden Bauteils (11) an das Verkleidungsteil (10) über eine Rastverbindung erfolgt.

14. Anordnung (1) nach einem der Ansprüche 1 bis 13, **dadurch gekennzeichnet, daß** das Verkleidungsteil (10) mit wenigstens einem quer gegen die Lenksäule (2) wirkenden Abstützmittel (6) versehen ist.

15. Anordnung (1) nach Anspruch 14, **dadurch gekennzeichnet, daß** das Abstützmittel (6) in Form eines hülsenförmigen Federelementes ausgeführt ist.

16. Anordnung (1) nach einem der Ansprüche 1 bis 15, **dadurch gekennzeichnet, daß** das zur Spaltabdeckung dienende Bauteil (11) im Querschnitt in etwa halbkreisförmig ausgebildet ist.

17. Anordnung (1) nach einem der Ansprüche 1 bis 16, **dadurch gekennzeichnet, daß** das Verkleidungsteil (10) im Bereich seiner Oberseite eine radial nach innen zurückversetzte Außenfläche (105) aufweist.

## Claims

1. Arrangement (1) for covering a gap at a recess (50) between a dashboard (5) and a steering column (2) which can be adjusted in different directions (A, B), comprising a soft-trim part (10) which essentially surrounds the steering column (2) and on which a rigid component (11), which serves to cover the gap, is articulated by means of a hinge joint (9), it being possible for the component (11) serving to cover the gap to be pressed against the dashboard (5) by means of at least one spring element (8) engaging on it, **characterized in that** the soft-trim part (10) and the component (11) serving to cover the gap have an essentially circular outer contour when brought together.

2. Arrangement (1) according to Claim 1, **characterized in that** the component (11) serving to cover the gap is articulated in the region of one end, which faces the steering wheel (3), of the soft-trim part (10) and in the region of the upper side thereof.

3. Arrangement (1) according to Claims 1 and 2, **characterized in that** the spring element (8) is designed in the form of a spiral spring.

4. Arrangement (1) according to Claims 1 and 2, **characterized in that** the spring element (8) is designed in the manner of a leaf spring.

5. Arrangement (1) according to one of Claims 1 to 4, **characterized in that** the soft-trim part (10) is a single part.

6. Arrangement (1) according to one of Claims 1 to 4, **characterized in that** the soft-trim part (10) comprises an upper part (10a) and a lower part (10b).

7. Arrangement (1) according to Claim 6, **characterized in that** the upper and lower parts (10a, 10b) are connected to each other in a latching manner.

8. Arrangement (1) according to one of Claims 1 to 7, **characterized in that** the soft-trim part (10) is provided, in the region of its lower side, with an opening (101) for at least partially accommodating a fixing device (7) for the steering column (2).

9. Arrangement (1) according to Claim 8, **characterized in that** the fixing device (7) is adapted in the region of the opening (101) essentially to the outer contour of the soft-trim part (10).

10. Arrangement (1) according to either of Claims 8 or 9, **characterized in that** in the longitudinal extent of the soft-trim part (10) the length of the opening (101) is dimensioned in such a manner that a longitudinal displacement of the soft-trim part (10) is not obstructed by the fixing device (7).

11. Arrangement (1) according to one of Claims 8 to 10, **characterized in that** the fixing device (7) comprises an eccentric (71).

12. Arrangement (1) according to one of Claims 1 to 11, **characterized in that** the soft-trim part (10) has an end-side opening (103) which serves to accommodate a steering-wheel-side shoulder (20) of the steering column (2).

13. Arrangement (1) according to one of Claims 1 to 12, **characterized in that** the articulation (9) of the component (11), which serves to cover the gap, on the soft-trim part (10) takes place via a latching connection.

14. Arrangement (1) according to one of Claims 1 to 13, **characterized in that** the soft-trim part (10) is provided with at least one supporting means (6) acting transversely with respect to the steering column (2).

15. Arrangement (1) according to Claim 14, **characterized in that** the supporting means (6) is designed in the form of a sleeve-shaped spring element.

16. Arrangement (1) according to one of Claims 1 to 15, **characterized in that** the component (11) serving to cover the gap is of approximately semicircular design in cross section.

17. Arrangement (1) according to one of Claims 1 to 16, **characterized in that** the soft-trim part (10) has, in the region of its upper side, an outer surface (105) which is set back radially to the inside.

## Revendications

1. Disposition (1) pour le recouvrement d'une fente au niveau d'un évidement (50) entre un tableau de bord (5) et une colonne de direction (2) qui est réglable dans différentes directions (A, B), comprenant une pièce d'habillage (10) entourant essentiellement la colonne de direction (2), sur laquelle un élément de construction rigide (11) servant au recouvrement de fente est articulé au moyen d'un assemblage à charnière (9), l'élément de construction (11) servant au recouvrement de la fente pouvant être poussé contre le tableau de bord (5) par au moins un élément à ressort (8) s'y appuyant, **caractérisée en ce que** la pièce d'habillage (10) et l'élément de construction (11) servant au recouvrement de fente présentent, dans l'état assemblé, un contour extérieur essentiellement circulaire.

2. Disposition (1) selon la revendication 1, **caractérisée en ce que** l'élément de construction (11) servant au recouvrement de fente est articulé dans la zone d'une extrémité de la pièce d'habillage (10) tournée vers un volant (3) et dans la zone de sa face supérieure.

3. Disposition (1) selon les revendications 1 et 2, **caractérisée en ce que** l'élément à ressort (8) est réalisé sous la forme d'un ressort hélicoïdal.

4. Disposition (1) selon les revendications 1 et 2, **caractérisée en ce que** l'élément à ressort (8) est réalisé sous la forme d'un ressort à lame.

5. Disposition (1) selon l'une des revendications 1 à 4, **caractérisée en ce que** la pièce d'habillage (10) est en une seule partie.

6. Disposition (1) selon l'une des revendications 1 à 4, **caractérisée en ce que** la pièce d'habillage (10) est composée d'une pièce supérieure (10a) et d'une pièce inférieure (10b).

7. Disposition (1) selon la revendication 6, **caractérisée en ce que** la pièce supérieure et la pièce inférieure (10a, 10b) sont assemblées l'une à l'autre par encliquetage.

8. Disposition (1) selon l'une des revendications 1 à 7, **caractérisée en ce que** la pièce d'habillage (10) est équipée, dans la zone de sa face inférieure, d'une ouverture (101) pour le logement, au moins partiellement, d'un dispositif de blocage (7) de la colonne de direction (2).

9. Disposition (1) selon la revendication 8, **caractérisée en ce que** le dispositif de blocage (7) est essentiellement adapté, dans la zone de l'ouverture (101), au contour extérieur de la pièce d'habillage (10).

10. Disposition (1) selon l'une des revendications 8 ou 9, **caractérisée en ce que**, dans l'extension longitudinale de la pièce d'habillage (10), la longueur de l'ouverture (101) est dimensionnée de telle manière qu'un coulissement longitudinal de la pièce d'habillage (10) n'est pas entravé par le dispositif de blocage (7).

11. Disposition (1) selon l'une des revendications 8 à 10, **caractérisée en ce que** le dispositif de blocage (7) comprend un excentrique (71).

12. Disposition (1) selon l'une des revendications 1 à 11, **caractérisée en ce que** la pièce d'habillage (10) présente, sur sa face frontale, une ouverture (103) servant à loger un épaulement (20) de la colonne de direction (2), côté volant.

13. Disposition (1) selon l'une des revendications 1 à 12, **caractérisée en ce que** l'articulation (9) de l'élément de construction (11) servant au recouvrement de la fente sur la pièce d'habillage (10) a lieu via une liaison par encliquetage.

14. Disposition (1) selon l'une des revendications 1 à 13, **caractérisée en ce que** la pièce d'habillage (10) est équipée avec au moins un moyen de support (6) agissant transversalement sur la colonne de direction (2).

15. Disposition (1) selon la revendication 14, **caractérisée en ce que** le moyen de support (6) est réalisé sous la forme d'un ressort en forme de manchon.

16. Disposition (1) selon l'une des revendications 1 à 15, **caractérisée en ce que** l'élément de construction (11) servant au recouvrement de la fente est configuré, en coupe transversale, à peu près en forme de demi-cercle.

17. Disposition (1) selon l'une des revendications 1 à 16, **caractérisée en ce que** la pièce d'habillage (10) présente, dans la zone de sa face supérieure, une surface extérieure renvoyée radialement vers l'intérieur (105).
